# EUROPÄISCHE PATENTANMELDUNG

(11) **EP 0 973 312 A1**
(43) Veröffentlichungstag der Anmeldung: **19.01.2000**
(21) Anmeldenummer: 98112934.9
(22) Anmeldetag: 11.07.1998
(51) Int. Cl.: H04M 3/42, H04M 3/50, H04M 3/56, H04M 15/00

(54) **Verfahren und Vorrichtung zur Simultanübersetzung von Telefongesprächen**

(71) Anmelder: Stöffler, Matthias, 71083 Herrenberg (DE); Reitz, Oliver, 35305 Grünberg (DE)
(72) Erfinder: Stöffler, Matthias, 71083 Herrenberg (DE); Reitz, Oliver, 35305 Grünberg (DE)
(74) Vertreter: Klocke, Peter, Dipl.-Ing.

(57) **Zusammenfassung**

Verfahren und Vorrichtung zur Simultanübersetzung von Telefongesprächen unter Verwendung eines Telefonnetzes mit einer Vielzahl von Anschlüssen und einem Vermittlungssystem zur Bereitstellung der im Telefonnetz erforderlichen Dienste. Dabei wird von der Steuereinheit des Vermittlungssystems aus einer über die Vermittlungseinheit des Vermittlungssystems empfangenen vorgegebenen, veränderbaren und von einem Anrufer angegebenen Ziffern- und/oder Buchstabenfolge Informationen über den Gebührenabrechnungsmodus, die zu übersetzende Sprachenkombination und die Zielnummer erkannt und gespeichert. Die Steuereinheit liest daran anschließend die Daten eines geeigneten Übersetzers aus der Speichereinheit in das Vermittlungssystems aus, ordnet sie dem Anrufer zu und verbindet den Übersetzer mit dem Anrufer mittels der Vermittlungseinheit. Im weiteren wird von der Steuereinheit die Zielnummer zur Verbindung mit dem Ziel an die Vermittlungseinheit weitergeleitet und nach Herstellung der Verbindung über die Konferenzeinheit in das Verbindungssystem werden alle Konferenzteilnehmer verbunden. Nach Beendigung der Konferenzschaltung werden sämtliche Verbindungen durch die Steuereinheit über die Vermittlungseinheit getrennt. Die Erfindung erlaubt die simultane von einem Vermittlungssystem unterstützte Übersetzung durch Einbringung geeigneter sich möglicherweise entfernt befindender Übersetzer im Rahmen einer Konferenzschaltung. Sie erlaubt die entsprechende Gebührenberechnung für den Netzbetreiber und den Übersetzer.

## Beschreibung

Die Erfindung betrifft ein Verfahren und eine Vorrichtung zur Simultanübersetzung von Telefongesprächen unter Verwendung eines Telefonnetzes mit einer Vielzahl von Anschlüssen und einem Vermittlungssystem zur Bereitstellung der im Telefonnetz erforderlichen Dienste.

Telefonnetze mit einem zugehörigen Vermittlungssystem sind allgemein bekannt. Es kann sich hierbei um jede Art der Sprachübertragung handeln, beispielsweise auch Internet, Bildtelefonie oder ähnliches. Diese Vermittlungssysteme bestehen in der Regel aus einer Vermittlungseinheit zum Verbinden der einzelnen Anschlüsse, eine Konferenzeinheit zur Verbindung von Konferenzschaltungen, eine Signalerkennungseinheit zur Erkennung und Auswertung eingehender Signale, eine Wiedergabeeinheit zur Ausgabe von aufgezeichneten Sprachsegmenten, eine Speichereinheit zur Speicherung von Daten und eine Steuereinheit zur Steuerung der einzelnen Vorgänge der Einheiten des Vermittlungssystems. Diese Vermittlungssysteme ermöglichen in der Regel bei Bedarf unter Verwendung der Konferenzeinheit Konferenzschaltungen mit mehreren Gesprächsteilnehmern.

Aufgrund der länderübergreifenden wirtschaftlichen Aktivitäten entstehen immer häufiger Situationen, in denen Geschäftspartner in verschiedenen Ländern mit unterschiedlichen Sprachen Kontakt miteinander aufnehmen müssen, um ein gemeinsames Projekt zu realisieren. Hierzu ist es häufig auch erforderlich, daß außer des schriftlichen Kontaktes auch mündlich viele Angelegenheiten besprochen werden müssen. Sofern keine gemeinsame Sprache zwischen den Geschäftspartnern gefunden werden kann, ist eine Verständigung per Telefon nicht möglich.

Der vorliegenden Erfindung liegt daher die Aufgabe zugrunde, hier Abhilfe zu schaffen und eine vereinfachte, vom Vermittlungssystem unterstützte Möglichkeit zur Simultanübersetzung vorzuschlagen.

Diese Aufgabe wird erfindungsgemäß durch ein Verfahren mit den Merkmalen des Hauptanspruchs sowie durch eine Vorrichtung mit den Merkmalen des Anspruchs 14 gelöst. Weitere vorteilhafte Ausgestaltungen sind den jeweiligen diesbezüglich rückbezogenen Unteransprüchen zu entnehmen.

Gemäß der Erfindung wird von der Steuereinheit aus einer über die Vermittlungseinheit empfangenen, vorgegebenen veränderbaren und von einem Anrufer eingegebenen Ziffern- und/oder Buchstabenfolge Informationen über den Gebührenabrechnungsmodus, die zu übersetzende Sprachkombination und die Zielnummer erkannt und gespeichert. Dabei kann die Ziffern- und/oder Buchstabenfolge von dem jeweiligen Anschlußapparat den Anrufes über das Telefonnetz, das Satellitennetz oder das Internet eingegeben werden. Die Ziffern-und/oder Buchstabenfolge, die der Anrufen einzugeben hat, besteht dabei einerseits aus der Anwahlnummer, die sich nach der Art der Zugangsberechtigung des Anrufers richtet. Entsprechend ergibt sich daraus dann auch die weitere Ziffern- oder Buchstabenfolge und der Zeitpunkt der Eingabe. Dieser kann bereits im Anschluß an die Anwahl oder nach gesonderter Aufforderung vorliegen. Mit dieser Ziffern- oder Buchstabenfolge können die zu übersetzenden Sprachkombinationen sowie weitere Anforderungen an den Übersetzer, wie beispielsweise Fachgebiet, eingegeben werden. Zusätzlich ist noch die Eingabe der Zielnummer notwendig. So kann beispielsweise bei einer ersten allgemeinen Zugangsart die Anwahl über eine spezielle Nummer und die Abrechnung über Einwahlkosten durch den Netzbetreiber erfolgen. Im Anschluß daran wird zu Sprachauswahl durch Eingabe, beispielsweise mittels Tonwahl aufgefordert. Gemäß einer anderen Zugangsart erfolgt die Anwahl und die Abrechnung entsprechend, jedoch erfolgt bereits mit der Anwahl eine Vorauswahl der Sprache durch die entsprechende Zugangsnummer. Bei einer dritten Zugangsart könnte beispielsweise für spezielle Vertragskunden, die häufig von diesem System gebrauch machen, die Anwahl über eine andere Nummer mit einem anderen auf den Vertragskunden abgestimmten Abbuchungsmodus, beispielsweise per Bankverbindung erfolgen, wobei hier aufgrund hoher Volumina andere Konditionen bei der Gebührenberechnung angeboten werden können. Bei dieser Zugangsart kann nach Anwahl der entsprechenden Nummer eine Autorisierung über Kundennummer und/oder persönlicher Identifikationsnummer (PIN) verlangt werden. Im Anschluß daran ist noch die Auswahl der Sprache durch den Anrufer notwendig. Die Steuereinheit zeichnet die entsprechenden Zeitabschnitte für die Ermittlung der Gebühren auf.

Anschließend liest die Steuereinheit die Daten eines geeigneten Übersetzers aus der Speichereinheit aus, die mit dem Profil der Vorgabe des Anrufers übereinstimmen, ordnet diese dem Anrufer zu und verbindet den Übersetzer mit dem Anrufer mittels der Vermittlungseinheit. Anschließend wird von der Steuereinheit die Zielnummer zur Verbindung mit dem Ziel an die Vermittlungseinheit weitergeleitet, und nach Herstellung der Verbindung über die Konferenzeinheit alle Konferenzteilnehmer verbunden. Nach Beendigung der Konferenzschaltung trennt die Steuereinheit sämtliche Verbindungen über die Vermittlungseinheit.

Die Erfindung erlaubt den Aufenthalt der einzelnen in dem System gespeicherten Übersetzer überall auf der Welt. Es eröffnet sich damit für einzelne Übersetzer die Möglichkeit, zusätzliche Übersetzungstätigkeiten bei entsprechender Abrufbereitschaft durchzuführen. Die Kommunikation kann dabei über alle bisher üblichen Telekommunikationsnetze mit den entsprechenden Signalübertragungsarten durchgeführt werden. Die zusätzlichen erforderlichen Angaben seitens der Anrufer können nach entsprechender automatischer sprachlicher Aufforderung durch die Wiedergabeeinheit mit aufgezeichneten Sprachsegmenten entweder durch Eingabe entsprechender Zifferfolgen oder durch die Sprache erfolgen. Hierzu können zusätzliche Spracherkennungssysteme eingesetzt werden, die den Sprachbefehl des Anrufers in entsprechende Signale zur Weiterleitung an die Steuereinheit umsetzen.

Gemäß einer weiteren Ausbildung der Erfindung fordert die Steuereinheit nach dem Erkennen des Gebührenabrechnungsmodus durch die Signalerkennungseinheit über die Wiedergabeeinheit den Anrufer zur Angabe der Sprachkombination und ggf. dem Sachgebiet auf. Nach dem Erkennen der Sprachkombination durch die Steuereinheit wird vorzugsweise mittels der Steuereinheit und der Wiedergabeeinheit der Anrufer zur Eingabe der Zielnummer aufgefordert.

Gemäß einer weiteren Ausbildung der Erfindung fordert die Steuereinheit vor der Auswahl des Übersetzers über die Wiedergabeeinheit den Anrufer zur Angabe eines bereits ihm bekannten Übersetzers auf und prüft, ob dieser Übersetzer zu diesem Zeitpunkt zur Verfügung steht. Vorzugsweise ist in der Speichereinheit der Terminkalender der zur Verfügung stehenden Übersetzer abgespeichert und die Steuereinheit trägt über die Wiedergabeeinheit und entsprechende Angaben des Anrufers Vorreservierungen in den Terminkalender ein.

Die Steuereinheit wählt über die Vermittlungseinheit die Zielnummer gemäß einer weiteren Ausbildung der Erfindung an, nachdem die Steuereinheit über die Wiedergabeeinheit den Anrufer auffordert, entweder, sofern noch nicht geschehen, die Zielnummer oder ein Startsignal für die Steuereinheit einzugeben.

Bei nicht möglicher Herstellung der Verbindung durch die Vermittlungseinheit teilt die Steuereinheit mittels der Wiedergabeeinheit dies dem Anrufer mit und der Anrufer wird zur Angabe eines Wiederholbefehls aufgefordert.

Um nach der Beendigung die Möglichkeit einzuräumen, daß der Anrufer mit dem gleichen Übersetzer eine weitere Simultanübersetzung durchzuführen wünscht oder in einer anderen Sprache eine Simultanübersetzung durchzuführen beabsichtigt, wird gemäß einer weiteren Ausbildung nach Beendigung der Verbindung mit der Zielnummer der Anrufer durch die Speichereinheit mittels der Wiedergabeeinheit zur Angabe einer neuen Zielnummer oder einer neuen Sprachenkombination aufgefordert, sofern der Anrufer nach Beendigung der Verbindung mit der Zielnummer durch die Vermittlungseinheit seine Verbindung zur Vermittlungseinheit nicht unterbricht bzw. nicht in einer gewissen Zeitspanne unterbricht.

Sofern in der Speichereinheit durch die Steuereinheit keinen passenden Übersetzer für die gewünschte Sprachenkombination gefunden werden kann, ermöglicht das Verfahren gemäß einer weiteren Ausbildung, daß die Steuereinheit mittels der Wiedergabeeinheit dem Anrufer die Übersetzung mit zwei Übersetzern anbietet und ihn zur Abgabe seiner Zustimmung auffordert. Im Falle der Zustimmung werden mittels der Vermittlungseinheit die Verbindungen zu den angewählten Übersetzern hergestellt und über die Konferenzeinheit mit dem Anrufer verbunden.

Auf Wunsch der Gesprächsteilnehmer kann gemäß einer weiteren Ausbildung mittels einer Gesprächsaufzeichnungseinheit die Konferenz aufgezeichnet werden.

Gemäß einer weiter bevorzugten Ausbildung ermittelt die Steuereinheit verschiedene Telefontarife entsprechend dem augenblicklichen Verbindungsstatus und seines Gebührenabrechnungsmodus und berechnet dies dem Anrufer. So können beispielsweise zur Preisermittlung seitens der Steuereinheit verschiedene Zeitintervalle gemessen werden, je nach dem, ob der Anrufer noch bei der Auswahl der Sprachenkombination ist, bereits mit dem Übersetzer verbunden ist, um mit diesem Einzelheiten des zu erwartenden zu übersetzenden Textes zu besprechen, oder die Simultanübersetzung im Rahmen der Konferenzschaltung durch den Übersetzer durchgeführt wird. Entsprechend werden die ermittelten Gebühren mittels der Steuereinheit dem Anrufer berechnet und einerseits dem Netzbetreiber und andererseits dem Übersetzer gutgeschrieben.

Mittels der Signalerkennungseinheit wird die Signalübertragungsart des Anrufers gemäß einer weiteren Ausbildung erkannt oder über die Wiedergabeeinheit der Anrufer zur Eingabe der Übertragungsart zugeordneten Signale aufgefordert und damit die Vermittlungseinheit auf die entsprechende Signalübertragungsart eingestellt.

Gemäß einer anderen Ausbildung der Erfindung werden in einer weniger automatisierten Form einzelne Tätigkeiten der Steuereinheit, der Signalerkennungseinheit und der Wiedergabeeinheit durch einen sog. Operator durchgeführt. Dieser kann die gewünschte Zielnummer, Sprachenkombination etc. erfragen, entsprechende Daten auswählen und die Verbindung herstellen.

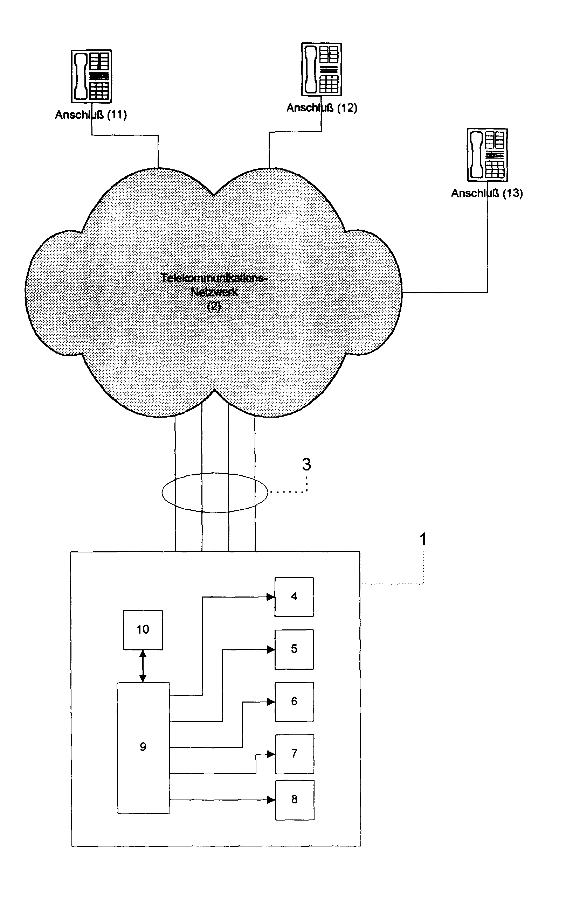

Die Figur zeigt in schematischer Darstellung ein Vermittlungssystem 1, das über eine Vielzahl von Verbindungsleitungen 3 mit einem Telekommunikationsnetz 2 (z. B. Internet, ISDN) mit einer Vielzahl von Teilnehmeranschlüssen verbunden ist. Das Telefonvermittlungssystem 1 weist eine Vermittlungseinheit 4, eine Konferenzeinheit 5, eine Signalerkennungseinheit 6, eine Wiedergabeeinheit 7 von aufgezeichneten Sprachsegmenten und eine Gesprächsaufzeichnung 8 auf. Diese Einheiten werden mittels einer Steuereinheit 9 und der zugeordneten Speichereinheit 10 gesteuert und entsprechend dem vorstehend beschriebenen Verfahren benutzt, um die Simultanübersetzung eines Telefongesprächs automatisch durchzuführen. Die Verbindung des Anrufers 11 als ein Anschluß aus dem Telefonnetz erfolgt zuerst mit dem Übersetzer 12 und dann mit Zielnummer 13. Selbstverständlich kann die Verbindung auch netzübergreifend mit Teilnehmern in anderen Netzen durchgeführt werden.

## Patentansprüche

1. Verfahren zur Simultanübersetzung von Telefongesprächen unter Verwendung eines Telefonnetzes (2) mit einer Vielzahl von Anschlüssen (11, 12, 13) und einem Vermittlungssystem (1) zur Bereitstellung der im Telefonnetz (2) erforderlichen Dienste, mit einer Vermittlungseinheit (4) zum Verbinden der einzelnen Anschlüsse, eine Konferenzeinheit (5) zur Herstellung von Konferenzschaltungen, eine Signalerkennungseinheit (6) zur Erkennung und Auswertung eingehender Signale, eine Wiedergabeeinheit (7) zur Ausgabe von aufgezeichneten Sprachsegmenten, eine Speichereinheit (10) zur Speicherung von Daten und einer Steuereinheit (9) zur Steuerung der einzelnen Vorgänge der Einheiten des Vermittlungssystems (1), bei dem
von der Steuereinheit (9) aus einer über die Vermittlungseinheit (4) empfangenen, vorgegebenen, veränderbaren und von einem Anrufer angegebenen Ziffern-und/oder Buchstabenfolge Informationen über den Gebührenabrechnungsmodus, die zu übersetzende Sprachkombination und die Zielnummer erkannt und gespeichert werden,
von der die Steuereinheit (9) die Daten eines geeigneten Übersetzers aus der Speichereinheit ausgelesen, dem Anrufer (11) zuordnet und der Übersetzer (12) mit dem Anrufer (11) mittels der Vermittlungseinheit (4) verbunden werden,
von der die Steuereinheit (9) die Zielnummer zur Verbindung mit dem Ziel (13) an die Vermittlungseinheit (4) weitergeleitet, und nach Herstellung der Verbindung über die Konferenzeinheit (5) alle Konferenzteilnehmer (11, 12, 13) verbunden werden und
nach Beendigung der Konferenzschaltung von der Steuereinheit (9) sämtliche Verbindungen über die Vermittlungseinheit (4) getrennt werden.

2. Verfahren nach Anspruch 1, **dadurch gekennzeichnet**, daß von der Steuereinheit (9) nach dem Erkennen des Gebührenabrechnungsmodus durch die Signalerkennungseinheit (6) über die Wiedergabeeinheit (7) der Anrufer (11) zur Angabe der Sprachkombination und ggf. des Sachgebiets aufgefordert wird.

3. Verfahren nach Anspruch 2, **dadurch gekennzeichnet**, daß von der Steuereinheit (9) nach dem Erkennen der Sprachkombination über die Wiedergabeeinheit (7) der Anrufer (11) zur Eingabe der Zielnummer aufgefordert wird.

4. Verfahren nach einem der vorangegangenen Ansprüche, **dadurch gekennzeichnet**, daß von der Steuereinheit (9) vor der Auswahl des Übersetzers über die Wiedergabeeinheit (7) den Anrufer (11) zur Angabe eines bereits ihm bekannten Übersetzers aufgefordert und geprüft wird, ob dieser Übersetzer zu diesem Zeitpunkt zur Verfügung steht.

5. Verfahren nach einem der vorangegangenen Ansprüche, **dadurch gekennzeichnet**, daß in der Speichereinheit (10) der Terminkalender der zur Verfügung stehenden Übersetzer abgespeichert ist und von der Steuereinheit (9) über die Wiedergabeeinheit (7) und den entsprechenden Angaben des Anrufers (11) Vorreservierungen in den Terminkalender in der Speichereinheit (10) eingetragen werden.

6. Verfahren nach einem der vorangegangenen Ansprüche, **dadurch gekennzeichnet**, daß von der Steuereinheit (9) über die Wiedergabeeinheit (4) der Anrufer (11) aufgefordert wird, entweder, sofern noch nicht geschehen, die Zielnummer oder ein Startsignal für die Steuereinheit (9) zu geben, um die Zielnummer über die Vermittlungseinheit (4) anzuwählen.

7. Verfahren nach einem der vorangegangenen Ansprüche, **dadurch gekennzeichnet**, daß bei nicht möglicher Herstellung der Verbindung durch die Vermittlungseinheit (4) von der Steuereinheit (9) mittels der Wiedergabeeinheit (7) dies dem Anrufer (11) mitgeteilt und zur Angabe eines Wiederholbefehls aufgefordert wird.

8. Verfahren nach einem der vorangegangenen Ansprüche, **dadurch gekennzeichnet**, daß nach Beendigung der Verbindung mit der Zielnummer von der Steuereinheit (9) mittels der Wiedergabeeinheit der Anrufer (11) zur Angabe einer neuen Zielnummer oder einer neuen Sprachkombination aufgefordert wird, sofern der Anrufer (11) nach Beendigung der Verbindung mit der Zielnummer durch die Vermittlungseinheit (4) seine Verbindung zur Vermittlungseinheit (4) nicht unterbricht.

9. Verfahren nach einem der vorangegangenen Ansprüche, **dadurch gekennzeichnet**, daß bei fehlender Sprachkombination von der Steuereinheit (9) mittels der Wiedergabeeinheit (4) dem Anrufer (11) die Übersetzung mit zwei Übersetzern angeboten, zur Abgabe seiner Zustimmung aufgefordert und im Falle der Zustimmung mittels der Vermittlungseinheit (4) die Verbindung zu den angewählten Übersetzern hergestellt und über die Konferenzeinheit (5) mit dem Anrufer (11) verbunden wird.

10. Verfahren nach einem der vorangegangenen Ansprüche, **dadurch gekennzeichnet,** daß mittels einer Gesprächsaufzeichnungseinheit (8) auf Anforderung durch die Konferenzteilnehmer die Konferenzgespräche aufgezeichnet werden.

11. Verfahren nach einem der vorangegangenen Ansprüche, **dadurch gekennzeichnet**, daß von der Steuereinheit (9) verschiedene Telefontarife durch die Messung der Zeitintervalle entsprechend dem augenblicklichen Verbindungsstatus und des Gebührenabrechnungsmodus des Anrufers ermittelt und dem Anrufer berechnet werden.

12. Verfahren nach einem der vorangegangenen Ansprüche, **dadurch gekennzeichnet**, daß mittels der Signalerkennungseinheit (6) die Signalübertragungsart des Anrufers erkannt und über die Wiedergabeeinheit (4) der Anrufer (11) zur Eingabe der Übertragungsart zugeordneten Signale aufgefordert oder die Vermittlungseinheit (4) auf die Signalübertragungsarten umgestellt wird.

13. Verfahren nach einem der vorangegangenen Ansprüche, **dadurch gekennzeichnet**, daß die Signalerkennung und/oder die Interaktion mit dem Anrufer manuell ohne Verwendung der Wiedergabeeinheit (7) durchgeführt wird.

14. Vorrichtung zur Simultanübersetzung von Telefongesprächen in einem Telefonnetz (2) mit einer Vielzahl von Anschlüssen (11, 12, 13) mit einem Vermittlungssystem (1) zur Bereitstellung der im Telefonnetz (2) erforderlichen Dienste, mit einer Vermittlungseinheit (4) zum Verbinden der einzelnen Anschlüsse, eine Konferenzeinheit (5) zur Herstellung von Konferenzschaltungen, eine Signalerkennungseinheit (6) zur Erkennung und Auswertung eingehender Signale, eine Wiedergabeeinheit (7) zur Ausgabe von aufgezeichneten Sprachsegmenten, eine Speichereinheit (10) zur Speicherung von Daten und einer Steuereinheit (9) zur Steuerung der einzelnen Vorgänge der Einheiten des Vermittlungssystems (1), wobei
die Steuereinheit (9) aus einer über die Vermittlungseinheit (4) empfangenen, vorgegebenen, veränderbaren und von einem Anrufer angegebenen Ziffern-und/oder Buchstabenfolge Informationen über den Gebührenabrechnungsmodus, die zu übersetzende Sprachkombination und die Zielnummer erkennt und speichert,
die Steuereinheit (9) die Daten eines geeigneten Übersetzers aus der Speichereinheit ausliest, dem Anrufer (11) zuordnet und den Übersetzer (12) mit dem Anrufer (11) mittels der Vermittlungseinheit (4) verbindet,
die Steuereinheit (9) die Zielnummer zur Verbindung mit dem Ziel (13) an die Vermittlungseinheit (4) weiterleitet, und nach Herstellung der Verbindung über die Konferenzeinheit (5) alle Konferenzteilnehmer (11, 12, 13) verbindet, und
nach Beendigung der Konferenzschaltung die Steuereinheit (9) sämtliche Verbindungen über die Vermittlungseinheit (4) trennt.

15. Vorrichtung nach Anspruch 14, **dadurch gekennzeichnet**, daß die Steuereinheit (9) über die Wiedergabeeinheit (7) die Interaktion mit dem Anrufer (11) und dem Übersetzer durchführt.

16. Vorrichtung nach einem der vorangegangenen Ansprüche 14 oder 15, **dadurch gekennzeichnet**, daß in der Speichereinheit (10) der Terminkalender der zur Verfügung stehenden Übersetzer abgespeichert ist und die Steuereinheit (9) über die Wiedergabeeinheit (7) und den entsprechenden Angaben des Anrufers (11) Vorreservierungen in den Terminkalender in der Speichereinheit (10) einträgt.

17. Vorrichtung nach einem der vorangegangenen Ansprüche14 bis 16, **dadurch gekennzeichnet**, daß die Steuereinheit (9) verschiedene Telefontarife durch die Messung der Zeitintervalle entsprechend dem augenblicklichen Verbindungsstatus und des Gebührenabrechnungsmodus des Anrufers ermittelt und dem Anrufer berechnet.
